# EUROPÄISCHE PATENTANMELDUNG

(11) **EP 0 899 844 A1**
(43) Veröffentlichungstag der Anmeldung: **03.03.1999**
(21) Anmeldenummer: 98810826.2
(22) Anmeldetag: 21.08.1998
(51) Int. Cl.: H02G 5/06

(54) **Gasisolierte Leitung und Verfahren zur Herstellung dieser Leitung**

(30) Priorität: 29.08.1997 DE 19737674
(71) Anmelder: Asea Brown Boveri AG, 5401 Baden (CH)
(72) Erfinder: Mendik, Michael, Dr., 8820 Wädenswil (CH); von Tobel, Georg, 5430 Wettingen (CH)
(74) Vertreter: Kaiser, Helmut, Dr.

(57) **Zusammenfassung**

Die gasisolierte Leitung (1) enthält ein isoliergasgefülltes Isolierstoffrohr (2), einen im Isolierstoffrohr (2) angeordneten, hochspannungsführenden Stromleiter (3), welcher durch eine Gehäuseöffnung ins Innere einer isoliergasgefüllten Metallkapselung (5) führbar ist, und ein Abschlussstück (6). Dieses Abschlussstück (6) dient der Verbindung zur Metallkapselung (5) und weist einen mit einem Flansch (11) der Metallkapselung (5) gasdicht verbindbaren Montageflansch (7) aus Isoliermaterial auf sowie eine vom Montageflansch (7) ins Rohrinnere erstreckte, rotationssymmmetrische Lichtbogenbarriere (12). Um einen dielektrisch besonders wirksamen Abschluss der gasisolierten Leitung (1) zu erreichen, ist die Lichtbogenbarriere (12) auf die Mantelfläche des Stromleiters (3) geführt und weist eine auf dieser Mantelfläche aufliegende Abschirmung (13) auf.

## Beschreibung

### TECHNISCHES GEBIET

Bei der Erfindung wird ausgegangen von einer gasisolierten Leitung nach dem Oberbegriff von Patentanspruch 1. Die Erfindung betriffl auch ein Verfahren zur Herstellung einer solchen Leitung.

Die gasisolierte Leitung dient einer nahezu verlustfreien Übertragung elektrischer Energie und ist mit einer metallgekapselten Schaltanlage verbindbar, in der die elektrische Energie auf eine Sammelschiene oder eine andere Leitung geführt werden kann. Die Verbindung zwischen der gasisolierten Leitung und der Metallkapselung bewirkt ein Anschlussstück, welches einen dielektrisch günstigen Übergang von der gasisolierten Leitung auf die Metallkapselung gewährleisten soll und zugleich eine gasdichte Verbindung der Leitung und der Metallkapselung ermöglicht.

### STAND DER TECHNIK

Eine gasisolierte Leitung der eingangs genannten Art ist in EP 0 774 817 A2 beschrieben. Diese Leitung enthält einen hochspannungsführenden Stromleiter und ein den Stromleiter koaxial umgebendes und mit leitendem oder halbleitendem Material beschichtetes Isolierstoffrohr. Der Stromleiter dieser Leitung ist in gasdichter Weise durch eine Wandöffnung ins Innere einer isoliergasgefüllten, geerdeten Metallkapselung geführt. Zu diesem Zweck weist das Isolierstoffrohr ein Abschlussstück mit einem trompetenartig aufgeweiteten Endabschnitt auf, der in einen mit einem Flansch der Metallkapselung gasdicht verbundenen Montageflansch ausläuft. Der trompetenartig aufgeweitete Endabschnitt trägt auf seiner dem Stromleiter zugewandten Innenseite einen als Lichtbogenbarriere dienenden Isolierring.

### KURZE DARSTELLUNG DER ERFINDUNG

Der Erfindung, wie sie in Patentanspruch 1 angegeben ist, liegt die Aufgabe zugrunde, eine gasisolierte Leitung der eingangs genannten Art anzugeben, welche einfach und preiswert hergestellt werden kann und sich durch gute dielektrische Eigenschaften auszeichnet. Zugleich ist es Aufgabe der Erfindung, ein besonders vorteilhaftes Verfahren zur Herstellung einer solchen Leitung anzugeben.

Die gasisolierte Leitung nach der Erfindung zeichnet sich dadurch aus, dass durch geeignete Ausbildung des Anschlussstücks möglicherweise in der gasisolierten Leitung entstehende Teilentladungen vor ihrem Aufgleiten auf die Metallkapselung mit grosser Sicherheit abgefangen werden können. Dadurch wird in einer elektrischen Anlage, in der neben der gasisolierten Leitung nach der Erfindung auch eine mit dieser Leitung verbundene Metallkapselung vorgesehen ist, die Ausbildung von elektrischen Überschlägen vermieden, welche die Funktionsfähigkeit der Anlage möglicherweise gefährden könnten.

### KURZE BESCHREIBUNG DER ZEICHNUNGEN

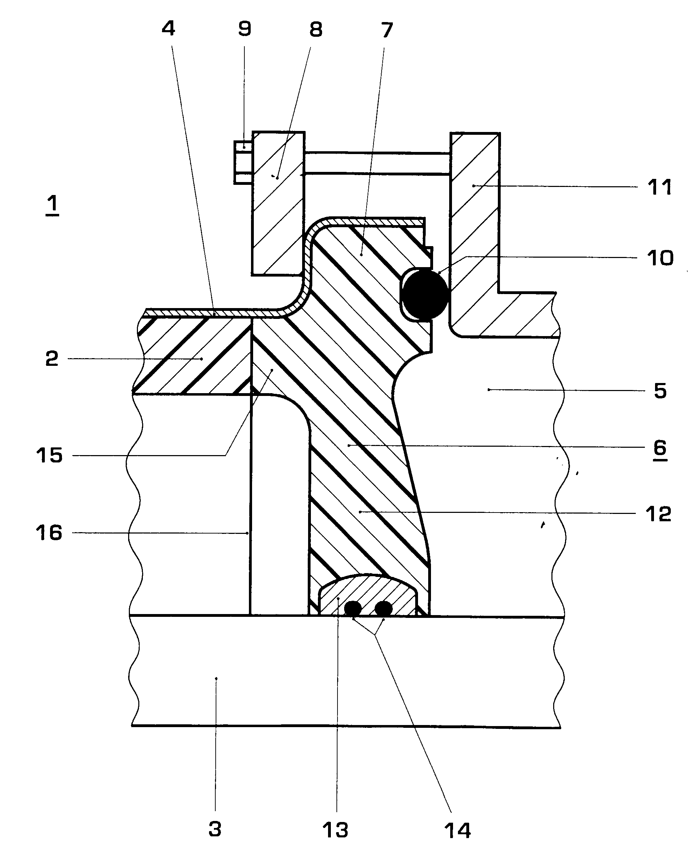

Ein bevorzugtes Ausführungsbeispiel der Erfindung und die damit erzielbaren weiteren Vorteile werden nachfolgend anhand einer Zeichnung näher erläutert. Hierbei zeigt die einzige Figur eine Aufsicht auf einen axial geführten Schnitt durch den oberhalb der Achse gelegenen Teil eines mit einer Metallkapselung verbundenen Abschlussteils einer gasisolierten Leitung nach der Erfindung.

### WEGE ZUR AUSFÜHRUNG DER ERFINDUNG

Die in der einzigen Figur dargestellte und mit dem Bezugszeichen 1 gekennzeichnete gasisolierte Leitung ist mit einem Isoliergas, wie etwa SF₆, von bis zu einigen bar Druck gefüllt und enthält einen im wesentlichen zentral in einem Isolierstoffrohr 2 gehaltenen Stromleiter 3. Das Isolierstoffrohr 2 ist aus einem gegebenenfalls füllstoffverstärkten Kunststoff gebildet, wie etwa einem Thermoplast, insbesondere auf der Basis von Polyäthylen, oder einem Duromer auf der Basis von Epoxid oder Polyester, und weist auf seiner Mantelfläche eine Beschichtung 4 aus elektrisch leitendem oder elektrisch halbleitendem Material auf, die mit einer isoliergasgefüllten und elektrische Aktivteile enthaltenden Metallkapselung 5 verbunden ist. Die Beschichtung 4 stellt ein definiertes Nullpotential auf der Mantelfläche des Isolierstoffrohrs 2 sicher und homogenisiert das elektrische Feld im Gasraum zwischen dem Stromleiter 3 und dem Isolierstoffrohr 2. Der Stromleiter 3 ist durch eine Gehäuseöffnung ins Innere der Metallkapselung 5 geführt. Ein Abschlussstück 6 der gasisolierten Leitung 1 weist einen vorzugsweise aus dem gleichen Material wie das Isolierstoffrohr 2 bestehenden Montageflansch 7 auf. Der Montageflansch 7 ist mittels eines Druckringes 8, Spannschrauben 9 und eines Dichtungsringes 10 gasdicht mit einem Flansch 11 der Metallkapselung 5 verspannt.

Das Abschlussstück 6 enthält ferner eine rotationssymmmetrische, kreisscheiben- oder gegebenenfalls auch trichter- oder wellenförmig ausgebildete Lichtbogenbarriere 12. Diese Lichtbogenbarriere ist an den aus dem gleichen Material bestehenden Montageflansch 7 angeformt und erstreckt sich ins Innere des Isolierstoffrohrs 2 bis auf die Mantelfläche des Stromleiters 3. Die Lichtbogenbarriere 12 trägt an der dem Stromleiter 3 zugewandten Innenfläche eine auf der Mantelfläche aufliegende Abschirmung 13 aus einem elektrisch leitenden oder halbleitenden Material. Um eine besonders hohe mechanische Festigkeit des Abschlussstücks 6 zu erreichen, enthält das Material der Abschirmung 13 den gleichen Kunststoff, insbesonder HD-Polyäthylen, wie das Isolierstoffrohr 2 bzw. die Lichtbogenbarriere 12 und zusätzlich mindestens 10 Gewichtsprozent elektrisch leitende oder halbleitende Teile, beispielsweise Leitfähigkeitsruss, TiB₂ oder ZnO. Durch diese Ausbildung des Abschlussstücks 6 können während des Betriebs der Anlage auf der Innenseite des Isolierstoffrohrs 2 auftretende Gleitentladungen abgeblockt und am Übertreten in die Metallkapselung 5 gehindert werden. Eine dielektrische Entlastung der Lichtbogenbarriere 12 wird durch die Abschirmung 13 erreicht.

Durch einen oder mehrere Dichtungsringe 14, welche zwischen der Lichtbogenbarriere 12 und der Mantelfläche des Stromleiters 3 angeordnet sind und den Stromleiter umgeben, ist dafür Sorge getragen, dass die gasisolierte Leitung 1 gasdicht abgeschlossen ist.

Vorzugsweise enthalten das Abschlussstück 6 und das Isolierstoffrohr 2 thermoplastisches Material, insbesondere HD-Polyäthylen. Beide Teile können dann in einfacher Weise, beispielsweise durch Schweissen, stoffschlüssig miteinander verbunden werden. Zu diesem Zweck weist das Abschlussstück 6 einen nach links ausgerichteten Rohransatz 15 auf, welcher mit dem rechten Ende des Isolierstoffrohrs 2 stoffschlüssig verbunden ist.

Eine derart ausgebildete gasisolierte Leitung 1 kann mit Vorteil wie folgt hergestellt werden. Das mit der Beschichtung 4 versehene Isolierstoffrohr 2 wird durch Koextrusion eines thermoplastischen Isoliermaterials und eines elektrisch leitenden oder halbleitenden Grundstoffs hergestellt. Am rechten Ende des Isolierstoffrohrs 2 wird die Beschichtung 4 entfernt. Der Rohransatz 15 des Abschlussstücks 6 und damit auch der Montageflansch 7 und die Lichtbogenbarriere 12 werden mit dem beschichtungsfreien rechten Ende des Isolierstoffrohrs 2 verschweisst. Auf die hierbei gebildete, vorzugweise geglättete Schweissnaht 16 wird Beschichtungsmaterial aufgetragen.

Alternativ können das Abschlussstück 6 und damit auch die Lichtbogenbarriere 12 und der Montageflansch 7 beim Herstellen des Isolierstoffrohrs 2 in einer Pressform in das Isolierstoffrohr 2 eingeformt werden.

### Bezugszeichenliste

- 1: gasisolierte Leitung
- 2: Isolierstoffrohr
- 3: Stromleiter
- 4: Beschichtung
- 5: Metallkapselung
- 6: Abschlussstück
- 7: Montageflansch
- 8: Druckring
- 9: Spannschrauben
- 10: Dichtungsring
- 11: Flansch
- 12: Lichtbogenbarriere
- 13: Abschirmung
- 14: Dichtungsringe
- 15: Rohransatz
- 16: Schweissnaht

## Patentansprüche

1. Gasisolierte Leitung (1) mit einem isoliergasgefüllten Isolierstoffrohr (2), einem im Isolierstoffrohr (2) angeordneten, hochspannungsführenden Stromleiter (3), welcher durch eine Gehäuseöffnung ins Innere einer isoliergasgefüllten Metallkapselung (5) führbar ist, und mit einem Abschlussstück (6), welches einen mit einem Flansch (11) der Metallkapselung (5) gasdicht verbindbaren Montageflansch (7) aus Isoliermaterial und eine vom Montageflansch (7) ins Rohrinnere erstreckte, rotationssymmmetrische Lichtbogenbarriere (12) aufweist, dadurch gekennzeichnet, dass die Lichtbogenbarriere (12) auf die Mantelfläche des Stromleiters (3) geführt ist und eine auf dieser Mantelfläche aufliegende elektrische Abschirmung (13) aufweist.

2. Gasisolierte Leitung nach Anspruch 1, dadurch gekennzeichnet, dass zwischen Lichtbogenbarriere (12) und Mantelfläche mindestens ein den Stromleiter umgebender Dichtungsring (14) angebracht ist.

3. Gasisolierte Leitung nach einem der Ansprüche 1 oder 2, dadurch gekennzeichnet, dass die Abschimung (13) elektrisch leitenden Kunststoff enthält.

4. Gasisolierte Leitung nach einem der Ansprüche 1 bis 3, dadurch gekennzeichnet, dass das Abschlussstück (6) und das Isolierstoffrohr (2) thermoplastisches Material enthalten und stoffschlüssig miteinander verbunden sind.

5. Gasisolierte Leitung nach Anspruch 4, dadurch gekennzeichnet, dass die Stoffschlüssigkeit durch Schweissen erreicht ist.

6. Gasisolierte Leitung nach einem der Ansprüche 1 bis 3, dadurch gekennzeichnet, dass das Isolierstoffrohr (2) thermoplastisches Material enthält, und dass das Abschlussstück (6) in das Isolierstoffrohr (2) eingeformt ist.

7. Gasisolierte Leitung nach einem der Ansprüche 4 - 6, dadurch gekennzeichnet, dass das thermoplastische Material ein Polyäthylen ist.

8. Gasisolierte Leitung nach einem der Ansprüche 1 bis 7, dadurch gekennzeichnet, dass auf der Mantelfläche des Isolierstoffrohrs (2) eine elektrisch leitende oder halbleitende Beschichtung (4) vorgesehen ist.

9. Verfahren zur Herstellung der gasisolierten Leitung nach Anspruch 8, dadurch gekennzeichnet, dass ein thermoplastischer und ein elektrisch leitender oder halbleitender Grundstoff zum beschichteten Isolierstoffrohr (2) extrudiert werden, dass an mindestens einem beider Enden des Isolierstoffrohrs (2) die Beschichtung (4) entfernt wird, dass der Montageflansch (7) und die damit verbundene Lichtbogenbarriere (12) mit dem beschichtungsfreien Ende des Isolierstoffrohrs (2) verschweisst werden, und dass auf die hierbei gebildete Schweissnaht (16) Beschichtungsmaterial aufgetragen wird.

10. Verfahren nach Anspruch 9, dadurch gekennzeichnet, dass die Schweissnaht (16) vor dem Auftragen des Beschichtungsmaterials geglättet wird.
